**Europäisches Patentamt**

**European Patent Office**

**Office européen des brevets**

(19)

(11) Numéro de publication: **0 138 935**
**B1**

(12) **FASCICULE DE BREVET EUROPÉEN**

(45) Date de publication du fascicule du brevet:
**22.07.87**

(51) Int. Cl.⁴: **G 01 N 29/00**

(21) Numéro de dépôt: **84901372.7**

(22) Date de dépôt: **09.04.84**

(86) Numéro de dépôt international:
**PCT/FR 84/00097**

(87) Numéro de publication internationale:
**WO 84/04167 (25.10.84 Gazette 84/25)**

(54) **PROCEDE ET APPAREIL A ULTRASONS POUR LE CONTROLE ET LA MESURE DE L'EVOLUTION DANS LE TEMPS DE PHENOMENES PHYSICO-CHIMIQUES, BIOLOGIQUES OU BACTERIOLOGIQUES.**

(30) Priorité: **12.04.83 FR 8305910**

(43) Date de publication de la demande:
**02.05.85 Bulletin 85/18**

(45) Mention de la délivrance du brevet:
**22.07.87 Bulletin 87/30**

(84) Etats contractants désignés:
**AT BE CH DE FR GB LI LU NL SE**

(56) Documents cité:
**DE-A-3 032 356**
**FR-A-2 227 529**
**GB-A-2 060 883**
**US-A-4 320 659**
**US-A-4 327 587**

**Strenght of Materials, volume 6, No. 2, February 1974, Plenum Publ. Corp. New York (US) E.V. Korovkin et al.: "Pulse echo method of investigating plastic strain"**

(73) Titulaire: **SOCIETE D'ETUDES ET DE RECHERCHES DE L'ECOLE NATIONALE SUPERIEURE D'ARTS ET METIERS en abrégé S E R A M, 151, Boulevard de l'Hôpital, F-75013 Paris (FR)**

(72) Inventeur: **PELLETIER, Jean- Louis Rue de Lan.Ar.Vein, Loguivy de la Mer, F-22620 Ploubazlanec (FR)**
Inventeur: **MOREAU, Michel, 1, rue du Jura, F-91330 Yerres (FR)**
Inventeur: **BOCQUET, Michel, 10, rue Roger Salengro, F-92130 Issy- Les- Moulineaux (FR)**

(74) Mandataire: **Chevallier, Robert Marie Georges, Cabinet BOETTCHER 23, rue La Boétie, F-75008 Paris (FR)**

## Description

L'invention a pour objet un procédé et un appareil à ultrasons pour le contrôle et la mesure de l'évolution dans le temps de certaines caractéristiques physiques et/ou chimiques au sein d'un milieu évolutif ou entre deux milieux. Le document US-A-4 327 587 décrit une méthode et un appareil de ce type.

L'invention trouve une utilité dans les cas cités ci-dessous à titre d'exemples non limitatifs, pour:
- la mesure du temps de prise d'un liant hydraulique,
- l'évaluation du temps de séchage d'une peinture ou du durcissement d'une colle,
- l'étude des changements d'état, passage de l'état solide à l'état liquide ou vice versa,
- la modification physico-chimique d'un contact (oxydation-écrouissage),
- la cristallisation d'un corps en solution ou la sédimentation d'un corps en suspension,
- la polymérisation d'une matière plastique,
- l'évaluation du temps de coagulation et/ou de sédimentation du sang,
- l'étude du caillage du lait.

On a déjà proposé d'utiliser un appareil à ultrasons pour détecter certains phénomènes physiques ou chimiques. A cet égard l'état de la technique est illustré par le document GB-A- 2 060 883 qui décrit un détecteur de verglas. Selon ce document on envoie des impulsions de tension à fréquence ultrasonore à un enroulement qui entoure une barre reliée à une tige étendue dans un sillon creusé dans la surface d'une route. La barre est en matière qui présente un effet de magnétostriction sous l'effet du champ magnétique créé dans l'enroulement. Il en résulte des vibrations à fréquence ultrasonore qui sont transmises dans la tige et qui se réfléchissent sur ses parois. La réflexion est différente quand la tige est en contact avec de l'eau ou avec de la glace. Inversement, en retour, par magnétostriction les vibrations réfléchies font que la barre induit dans l'enroulement des impulsions de tension qui sont recueillies et d'après lesquelles on déduit si la tige est entourée d'eau ou de glace. L'emploi de la magnétostriction est essentiel dans ce brevet.

Dans le document US-A-4 320 659 il est décrit un appareil pour la mesure de l'impédance acoustique d'un milieu ou pour la détection du niveau d'un liquide. A cette fin, une onde ultrasonore transversale polarisée verticalement est émise dans une barre avec un angle d'incidence à partir d'une face latérale ou d'une face extrême inclinée pour que cette onde se propage en zig-zag par réflexions successives; l'onde recueillie en un point éloigné est différente par suite du couplage qui se produit entre la barre et le milieu dans lequel elle plonge. En variante, l'onde transversale polarisée est envoyée dans la barre par une face extrême, mais le faisceau ultrasonore subit des réflexions qui se propagent parallèlement à l'axe de la barre; en outre, la barre a une face latérale présentant des crans espacés en sens longitudinal qui servent de surfaces de réflexion. Les réflexions recueillies sont différentes selon la nature ou le niveau du milieu avec lequel la barre est en contact. L'emploi d'ondes transversales polarisées est essentiel dans ce document.

On connaît aussi l'utilisation des ultrasons pour la mesure des épaisseurs ou des longueurs de pièces ou pour la localisation et l'évaluation de défauts (pailles, criques, fissures). La lecture s'opère immédiatement après l'écho obtenu par suite de la réflexion des ondes émises en sens longitudinal. Les échos secondaires sont plutôt gênants puisque la lecture ne s'opère que sur les échos principaux des ondes longitudinales émises parallèlement à l'axe.

Dans tous ces exemples, les ultra-sons sont utilisés avec un but limité (détection de verglas, détection d'un défaut, mesure d'une distance, détection d'un niveau, etc.) dans des conditions opératoires particulières (détection des seuls échos directs, création volontaire d'ondes polarisées verticalement ou horizontalement, emploi d'ondes dirigées en zig-zag, usage de surface de réflexion à emplacements dérerminés, etc.).

L'invention se distingue de ces emplois connus limités à des cas particuliers en ce sens qu'elle apporte un procédé universel de contrôle et de mesure de l'évolution dans le temps de phénomènes physico-chimiques, biologiques ou bactériologiques divers au sein d'un milieu ou entre deux milieux, selon lequel on plonge dans ce ou ces milieux au moins une fraction de la longueur de la face latérale d'un barreau allongé dans lequel on emet par une face d'émission des ondes ultrasons de manière à favoriser dans ce barreau la création de faisceaux d'ondes secondaires réfléchis sur l'ensemble de ladite face latérale, on recueille ces échos secondaires, on isole au moins l'un d'entre eux et on enregistre l'évolution dans le temps de son amplitude.

De préférence, on utilise comme face d'émission une face extrême du barreau perpendiculaire à sa dimension longitudinale.

On recueille les échos secondaires avantageusement sur la face extrême d'émission.

On utilise de préférence des ondes à une fréquence comprise entre 1 MHz et 20 MHz et des barreaux ayant une grosseur en sens transversal comprise entre 8 mm et 30 mm.

Dans l'esprit de l'invention, on obtient un résultat optimal quand on observe une relation entre la fréquence et la grosseur (de préférence le diamètre) du barreau utilisé. Par exemple, avec les fréquences suivantes: 2, 5, 10, 15, 20 MHz, il est avantageux d'utiliser des barreaux cylindriques ayant les diamètres correspondants suivants: 30 - 20 - 15 - 10 et 8 mm.

Ces valeurs des fréquences et des diamètres ne sont pas critiques, cependant, mais elles constituent des valeurs dont il est préférable de se rapprocher pour l'obtention des meilleurs résultats.

De préférence aussi on sélectionne les échos secondaires d'ordre 1 à 4 pour la mesure de l'évolution du milieu étudié.

L'invention concerne aussi un appareil tel que décrit dans la revendication 1.

De préférence, le barreau allongé a une longueur supérieure à trois fois son diamètre au moins.

Il est préférable que le barreau soit en matière bonne conductrice des ultrasons, susceptible de prendre un bon état de polissage de sa face latérale, et qu'elle possède un rapport vitesse de propagation des ondes longitudinales/vitesse de propagation des ondes transversales compris entre 1,57 et 1,70, de préférence égal à 1,65 environ, qu'elle possède une basse impédance.

Si l'on tient compte aussi que le barreau est destiné à être plongé dans des milieux très divers, parfois pendant des durées prolongées, il est préférable d'employer une matière résistante à la corrosion.

Le barreau dont l'emploi est préférable selon l'invention est une tige en verre étiré.

Avantageusement, le barreau est réuni à un générateur d'ultrasons de manière détachable par démontage ou par rupture.

On donnera maintenant une description de plusieurs exemples de mise en oeuvre de l'invention. On se reportera aux dessins annexés dans lesquels:

- la figure 1 est une représentation schématique d'un appareil conforme à l'invention pour l'utilisation du procédé de l'invention,
- la figure 2 est un réflectogramme,
- la figure 3 est un dessin schématique montrant la formation d'un écho secondaire dans le barreau de l'appareil de la figure 1,
- les figures 4a et 4b montrent schématiquement des faisceaux d'échos secondaires des ondes ultrasonores à l'intérieur d'un barreau d'abord plongé dans l'air puis plongé dans un milieu différent,

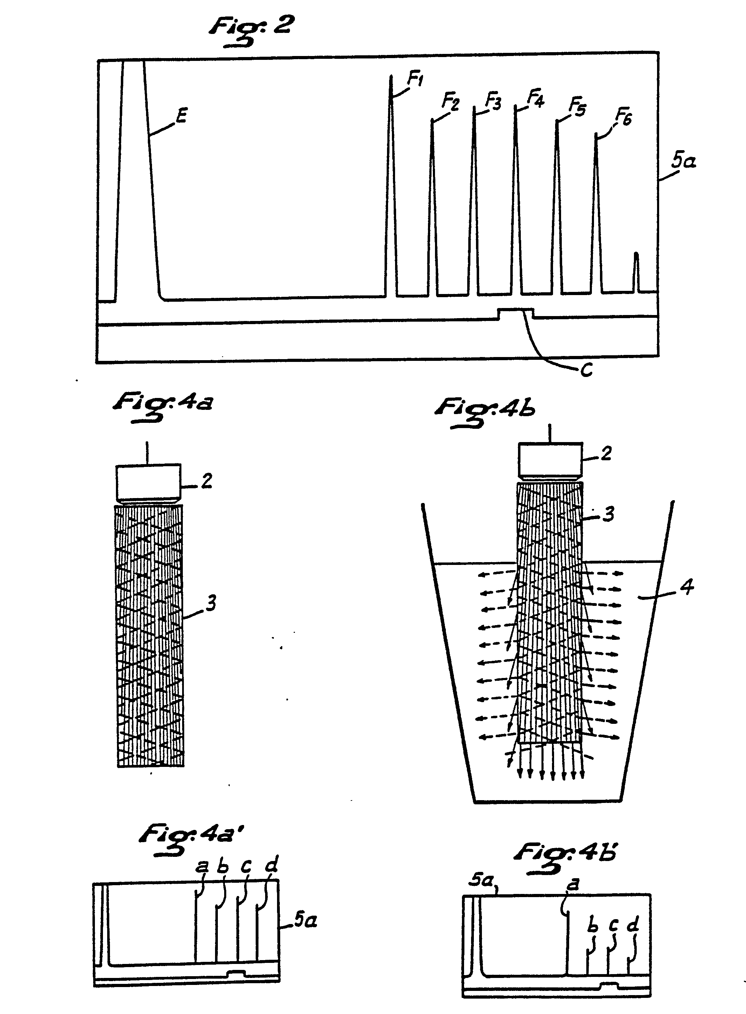

- les figures 4a' et 4b' sont les réflectogrammes correspondants aux figures 4a et 4b,

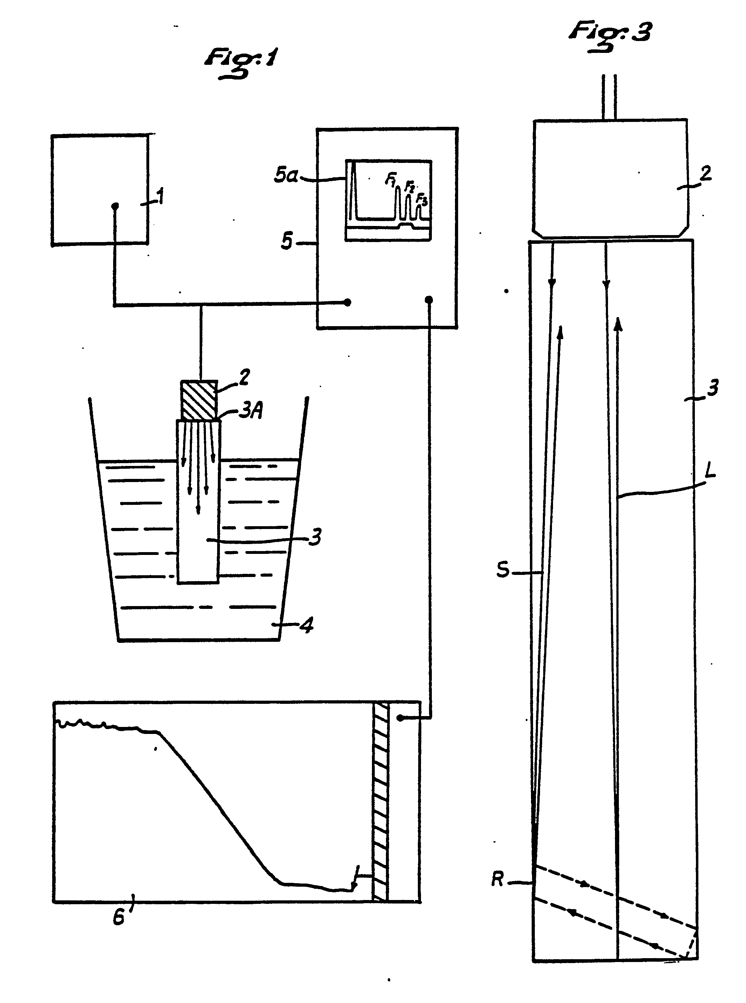

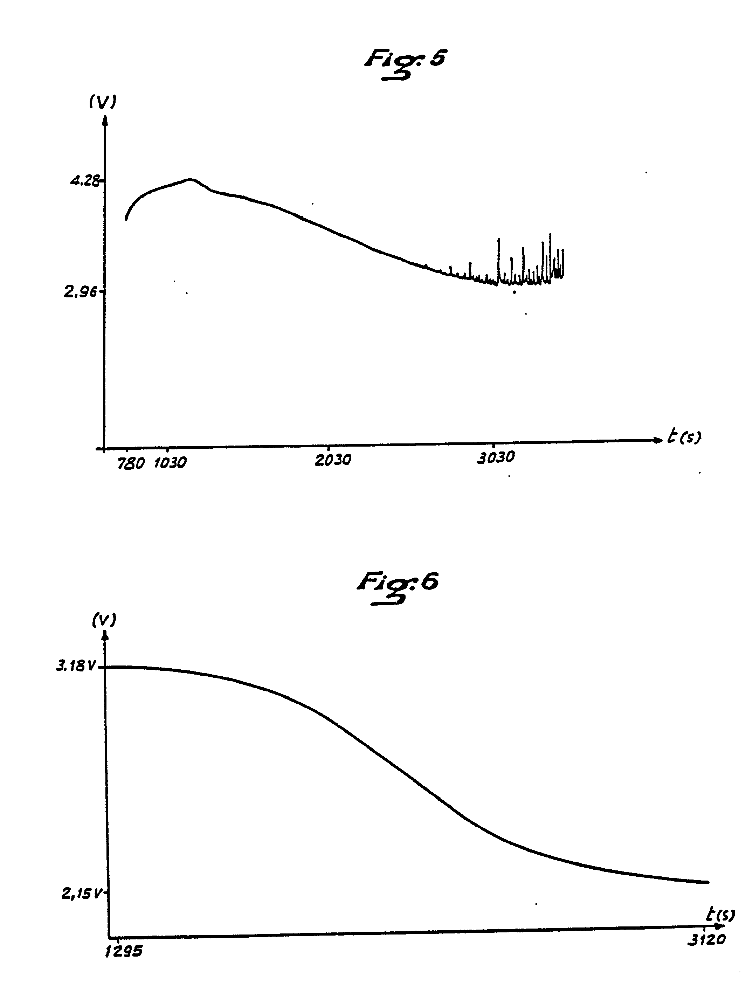

- les figures 5 à 11 sont des graphiques montrant l'évolution de divers milieux enregistrée avec l'appareil de la figure 1,

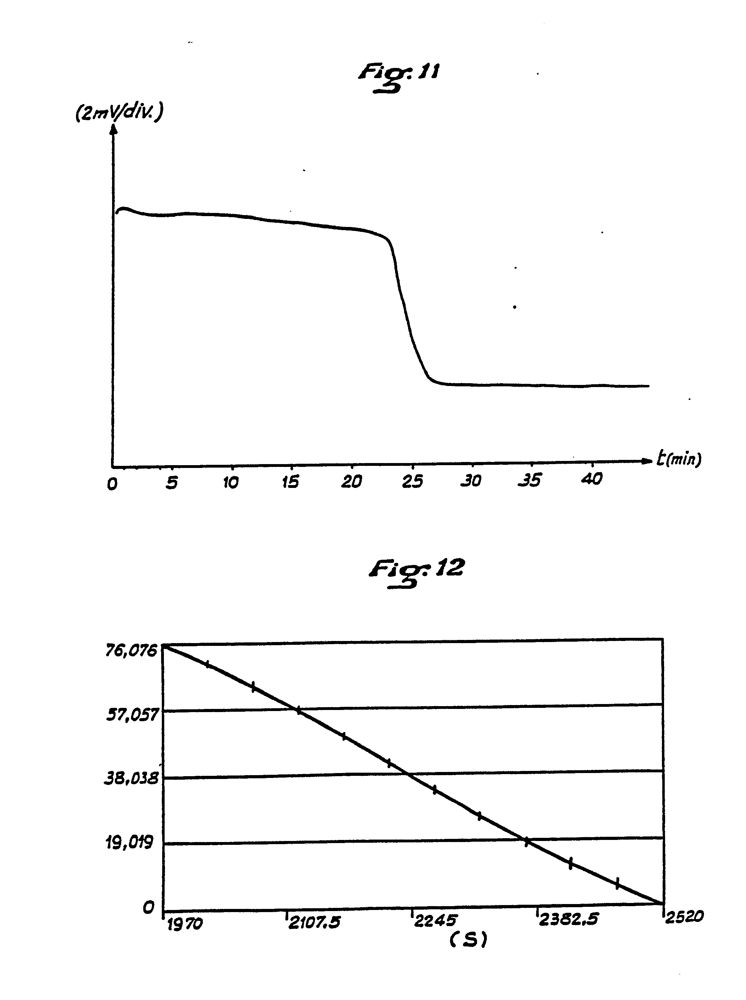

- la figure 12 montre un exemple de détermination par le calcul du point d'inflexion caractérisant le changement d'état d'un milieu, à partir du graphique de la figure 6,

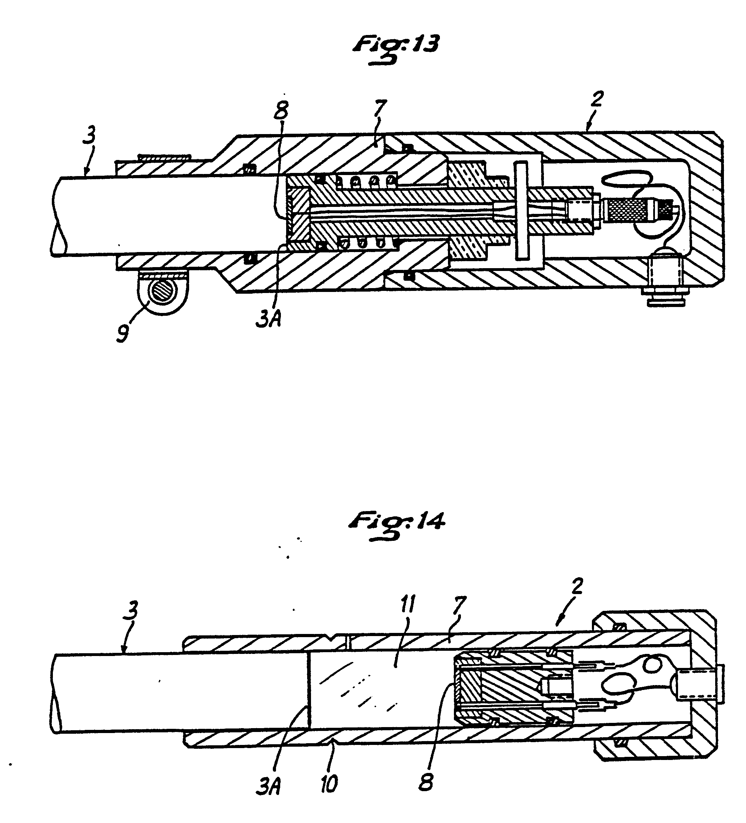

- les figures 13 et 14 sont respectivement des vues en coupe par un plan longitudinal d'une sonde à barreau détachable par démontage ou par rupture, pour l'appareil de la figure 1.

La figure 1 montre un appareil conforme à l'invention comprenant un générateur 1 d'impulsions à une fréquence de 15 MHz relié à une sonde constituée par une tête 2 à céramique émettrice-réceptrice et par un barreau allongé 3 qui est plongé dans un milieu 4 à étudier. On décrira plus loin en détail cette sonde. Le générateur 1 envoie des impulsions électriques à la céramique, généralement appelé transducteur, qui émet des ondes ultrasonores longitudinales se propageant dans le barreau 3 à partir de l'une de ses faces extrêmes 3A. La section du transducteur est voisine de celle du barreau 3 qui est le siège d'une intense activité ultrasonore par suite des échos provoqués par la réflexion des ondes d'une part sur la face extrême opposée à la face extrême d'émission, d'autre part et surtout sur l'ensemble de la face latérale du barreau. Le générateur 1 et la céramique émettrice-réceptrice 2 sont raccordés à un dispositif 5 connu du type à oscilloscope 5a avec sélecteur d'échos lui-même raccordé à un dispositif d'enregistrement 6, par exemple une table traçante X-Y, capable d'enregistrer en fonction du temps la variation de la hauteur d'un écho secondaire sélectionné, provenant d'ondes secondaires (S sur la figure 3).

La figure 2 montre un réflectogramme tel qu'il apparaît sur l'oscilloscope du dispositif 5.

Sur ce réflectogramme où l'amplitude des signaux est portée en ordonnées et le temps en abscisses, on observe en E le top d'émission, et en F1, F2, F3, F4, F5, F6 ... une série d'échos. F1 est l'écho principal direct obtenu par la réflexion des ultrasons en ondes longitudinales (L sur la figure 3) sur la face extrême du barreau opposée à la face extrême d'émission après un simple aller retour.

Les pics F2, F3, F4, F5, F6 ... sont des échos secondaires qui reviennent au transducteur à travers la face extrême d'émission 3A du barreau après des trajets obliques et diverses réflexions sur la paroi latérale du barreau. En fait il se produit à l'intérieur du barreau des faisceaux d'ondes secondaires où se mêlent des ondes de différents types, ondes longitudinales et ondes transversales; celles-ci ont une vitesse de propagation plus faible que les ondes longitudinales.

La figure 3 montre un trajet direct des ondes longitudinales L et un trajet d'une onde secondaire S qui fournit l'écho repéré F2 sur la figure 2. La partie en pointillé du trajet S est effectuée en ondes transversales après réflexion sur la face latérale et transformation en ondes longitudinales au point R.

La figure 4a montre schématiquement les faisceaux réfléchis à l'intérieur du barreau 3 quand celui-ci est plongé dans un milieu comme l'air. La figure 4a' montre la visualisation sur l'oscilloscope 5a des échos a, b, c, d qui proviennent des faces et du fond du barreau 3. Ne sont représentés ici que les quatre premiers échos a, b, c, d dans lesquels on trouve l'écho direct a et les trois premiers échos secondaires b, c, d.

Quand le barreau 3 est plongé dans un milieu différent, contenant un liquide ou plus généralement une phase qui assure un meilleur contact de transmission avec la face latérale du barreau 3, une fraction des ultrasons s'échappe dans le milieu (figure 4b). On voit sur la figure 4b' la diminution de la hauteur des échos a, b, c, d. Les échos secondaires b, c, d dus dans l'ensemble à de nombreuses réflexions successives sur la face latérale du barreau 3 sont très sensiblement affectés par cette modification. La mesure de la hauteur d'un ou de plusieurs de ces échos secondaires permet de suivre en fonction du temps l'évolution du milieu ou d'une interface. Il est avantageux de favoriser la formation de ces échos secondaires en utilisant un barreau 3 ayant un rapport longueur/diamètre supérieur à 3.

Bien entendu, la face latérale du barreau 3 doit être aussi réfléchissante que possible et elle doit garder son état de surface pendant qu'elle est plongée dans un milieu évolutif. Pour cette raison, un barreau en verre étiré convient bien.

On favorise aussi la formation des échos secondaires en observant une certaine relation, déjà mentionnée précédemment, entre la fréquence des ultrasons et la grosseur du barreau 3. Plus la fréquence est élevée, plus l'angle au sommet du cone d'emission est étroit et plus la grosseur du barreau doit être faible afin que sa face latérale soit rencontrée plus fréquemment par les ondes réfléchies. Il est entendu que l'on appelle ici face latérale la totalité de la face latérale du barreau sur tout le périmètre de sa section droite quelle qu'en soit la forme géométrique.

Les figures 13 et 14 représentent une sonde faisant partie de l'appareil de l'invention comprenant une tête 2 à partir de laquelle s'étend un barreau allongé 3 en verre étiré à surface lisse; dans son ensemble une telle sonde est connue et n'a pas besoin d'être décrite en détail. La tête 2 comprend un corps 7, de préférence en deux parties assemblées, creux, fermé à une extrémité et ouvert à l'extrémité opposée pour recevoir une partie extrême du barreau 3 terminée par une face extrême 3A perpendiculaire à sa dimension longitudinale. Dans le corps 7 est disposée une céramique émettrice-réceptrice 8, de type connu, piézo ou ferro-électrique, à base de titanate de baryum par exemple. Sur la figure 13, la céramique 8 est couplée avec le barreau 3 par contact direct avec la face extrême 3A de ce dernier; l'extrémité du corps 7 qui reçoit la partie extrême du barreau 3 est fendue en sens longitudinal et serrée sur le barreau 3 à l'aide d'un collier 9. Sur la figure 14 le barreau 3 est emmanché à force dans le corps 7 mais celui-ci présente dans sa face extérieure, en arrière de la face extrême 3A du barreau 3, une saignée circulaire 10 qui est une amorce de rupture. Le couplage entre la céramique 8 et la face extrême 3A se fait par l'intermédiaire d'un liquide 11. Dans les deux cas le barreau 3 est démontable de la tête et il peut être abandonné dans un milieu examiné, par exemple dans du béton dont on a surveillé la prise.

Ainsi qu'on l'a dit plus haut, quand le barreau 3 est mis en contact par sa face latérale lisse avec un milieu en évolution où se produisent des changements physico-chimiques ou biologiques entraînant une variation correspondante de la fraction des ondes non longitudinales qui s'échappent du barreau, on peut surveiller et mesurer ces changements en observant l'amplitude des échos secondaires.

Il est préférable pour obtenir une plus grande sensibilité de l'appareil que le barreau 3 plonge dans le milieu contrôlé sur la presque totalité de sa longueur mais, dans certaines circonstances, il suffit que sa face latérale soit mise convenablement en contact avec le milieu contrôlé.

On se reportera maintenant aux figures 5 à 11 pour donner des exemples réels d'application du procédé de l'invention.

Sur ces figures les courbes représentent l'évolution en fonction du temps (porté en secondes en abscisses) de l'amplitude (portée en volts, en ordonnées) d'un écho secondaire sélectionné et enregistré à l'aide des dispositifs 5, 6 de la figure 1 qui peuvent être respectivement un appareil tel que celui connu sous la dénomination commerciale de "Ultrasonic type R7" ou "Automatisation type SM80" et une table traçante connue sous la dénomination commerciale de "Sefram type Tyy". Il est à remarquer que pour la plupart des matériaux une partie de la courbe, qui correspond au changement d'état, obtenue selon le procédé de l'invention, est assimilable à une courbe du 3ème degré. Le changement d'état du milieu (liquide - solide), ou de l'interface (non oxydé - oxydé) présente une corrélation avec le point d'inflexion de cette courbe, point d'inflexion que l'on peut déterminer graphiquement ou par le calcul.

La figure 5 qui est le tracé de l'amplitude du premier écho secondaire (b sur la figure 4b') montre l'évolution de la prise d'un matériau connu sous la dénomination commerciale "plâtre de Paris", caractérisé par un rapport massique plâtre/eau égal à 1,5; le point d'inflexion se remarque après une durée de 35,5 minutes. Pour cet essai et les suivants, le barreau 3 en verre avait un diamètre de 20 mm et une longueur de 100 mm; l'ensemble générateur-transducteur fournissait des ultrasons à une fréquence de 15 MHz.

La figure 6 montre l'allure du durcissement d'un matériau connu qui est un mélange de poudre fine et d'une résine polymérisable sous l'effet d'un durcisseur, vendu sous la dénomination commerciale "Metolux", ayant un rapport durcisseur sur résine égal à 1. Le point d'inflexion est situé à 37 minutes (2.220 s) environ (détermination graphique).

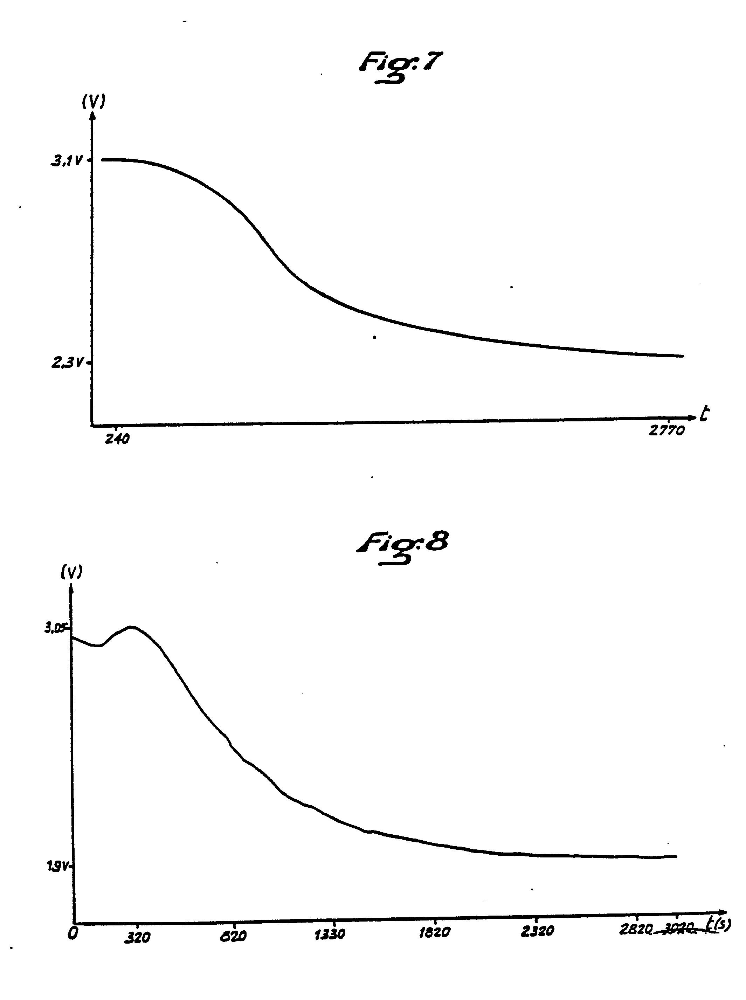

La figure 7 montre l'allure du durcissement d'un matériau connu sous la dénomination commerciale "araldite rapide" caractérisé par un rapport massique durcisseur sur résine époxy égal à 0,6. Le point d'inflexion est situé à environ 14,6 minutes (détermination graphique).

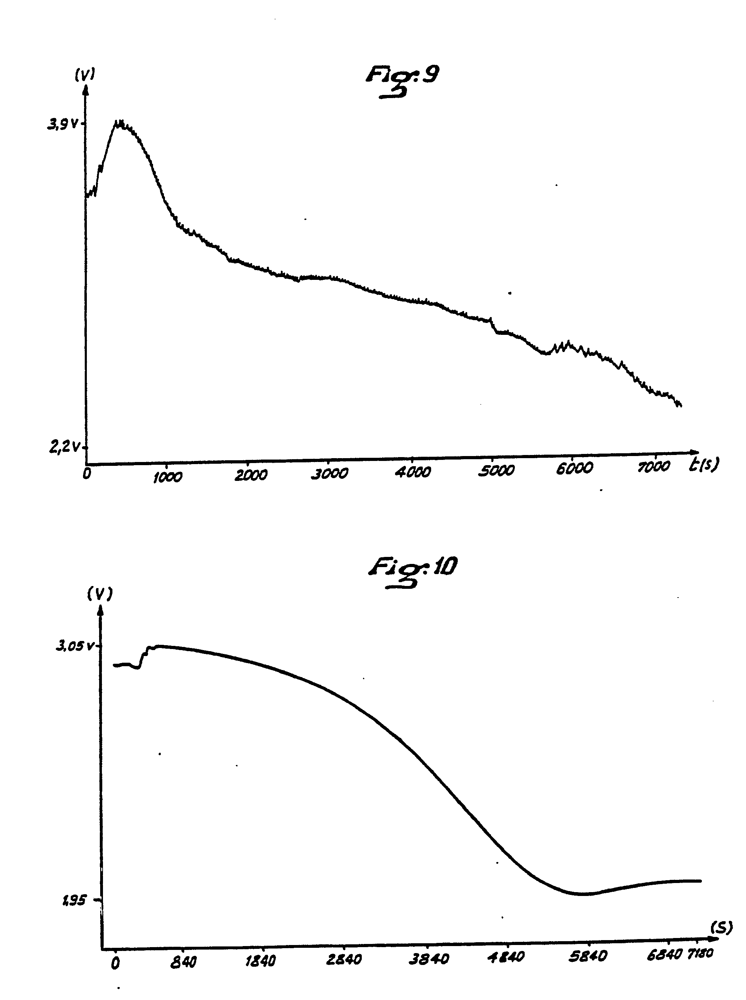

La figure 8 montre l'allure du séchage d'une peinture, dont le solvant est l'eau. Après une période initiale qui dure 400 s environ, la courbe s'apparente à une exponentielle dont la période (360 s) a été déterminée graphiquement.

La figure 9 montre le comportement du lait en cours de caillage auquel on a ajouté 2 g de présure par litre. Dans ce cas la mesure a été faite sur le deuxième écho secondaire (c sur la figure 4b').

La figure 10 montre l'évolution de la corrosion d'une barre en alliage d'aluminium (diamètre 20 mm, longueur 100 mm) connue sous la dénomination commerciale "Dural", plongée dans une solution de soude à 41 g par litre. La mesure a été faite en suivant l'évolution du 1er écho secondaire b.

La figure 11 montre le comportement d'une résine polymérisable connue sous la dénomination commerciale "Mécaprex", en cours de polymérisation. La mesure a été faite sur l'enregistrement du premier écho secondaire. Sur cette figure le temps est indiqué en minutes et la tension à raison de 2 mV/division. Le point d'inflexion se situe à 24 minutes (détermination graphique).

La figure 12 montre un exemple de détermination mathématique du point d'inflexion caractérisant l'évolution du durcissement du même produit que celui de l'exemple de la figure 6. Le calcul a été fait par ajustement à une fonction polynominale du 3ème degré selon la méthode des moindres carrés. L'abscisse du point d'inflexion est: 2223 s, la pente en ce point est: - 0,154.

Il est clair que le procédé de l'invention n'est nullement limité aux exemples de mise en oeuvre décrits et représentés qui n'ont été donnés qu'à titre d'exemple.

**Revendications**

1. Procédé de contrôle et de mesure de l'évolution dans le temps de phénomènes physico-chimiques, biologiques ou bactériologiques au sein d'un milieu ou entre deux milieux caractérisé en ce qu'on met en contact avec ce ou ces milieux au moins une fraction de la face latérale d'un barreau allongé dans lequel on émet par une face d'émission des ondes ultrasonores longitudinales de manière à favoriser dans ce barreau la création de faisceaux d'ondes secondaires réfléchies sur l'ensemble de ladite face latérale, on recueille ces échos secondaires, on isole au moins l'un d'entre eux, on mesure et on enregistre l'évolution dans le temps de son amplitude pour en déduire l'évolution du phénomène contrôlé.

2. Procédé selon la revendication 1 caractérisé en ce qu'on plonge le barreau dans le ou les milieux sur une fraction importante de la longueur de sa face latérale.

3. Procédé selon la revendication 1 caractérisé en ce qu'on utilise comme face d'émission une face extrême du barreau perpendiculaire à sa dimension longitudinale.

4. Procédé selon la revendication 3 caractérisé en ce qu'on recueille les ondes secondaires sur la même face extrême d'émission.

5. Procédé selon la revendication 1 caractérisé en ce qu'on utilise un barreau à face latérale lisse, de préférence en verre étiré.

6. Procédé selon la revendication 1 caractérisé en ce qu'on emploie un barreau allongé ayant une grosseur choisie entre 8 mm et 30 mm et on choisit en correspondance une fréquence d'ultrasons comprise entre 20 et 1 MHz.

7. Appareil pour le contrôle et la mesure de l'évolution dans le temps de phénomènes physico-chimiques, biologiques ou bactériologiques au sein d'un milieu ou entre deux milieux, comprenant un générateur (1) d'impulsions relié à une sonde comprenant une tête (2) à organe émetteur-récepteur (8) d'ultrasons et un barreau allongé (3) couplé audit organe (8), un dispositif de mesure (5) des ondes ultrasonores émises et reçues par l'organe (8), caractérisé en ce que le barreau (3) est en contact avec ce ou ces milieux et est couplé avec l'organe (8) par une face extrême (3A) perpendiculaire à sa dimension longitudinale, ce barreau (3) a une face latérale lisse et le dispositif de mesure (5) comprend des moyens électroniques de sélection de l'un des échos secondaires (F2 à F6) reçus par l'organe (8) et un moyen (6) d'enregistrement de l'évolution de l'amplitude dans le temps de l'écho sélectionné.

8. Appareil selon la revendication 7 caractérisé en ce que le barreau (3) a une face latérale dont la longueur est supérieure à au moins trois fois sa grosseur.

9. Appareil selon la revendication 7 caractérisé en ce que le barreau (3) est en matière ayant un rapport vitesse de propagation des ondes longitudinales/vitesse de propagation des ondes transversales compris entre 1,57 et 1,70, de préférence égal à 1,65 environ.

10. Appareil selon la revendication 7 caractérisé en ce que le barreau (3) est assemblé avec la tête (2) de manière détachable par démontage ou par rupture.

**Patentansprüche**

1. Verfahren zur Überwachung und Messung des zeitlichen Entwicklungsverlaufes von physikalisch-chemischen, biologischen oder bakteriologischen Phänomenen im Inneren eines Mediums oder zwischen zwei Medien, dadurch gekennzeichnet, daß man mit diesem oder diesen Medien wenigstens einen Teil der Seitenfläche eines langgestreckten Stabes in Berührung bringt, in den man durch eine Emissionsfläche longitudinale Ultraschallwellen derart emittiert, daß in diesem Stab auf der Gesamtheit seiner Seitenfläche die Erzeugung reflektierter Sekundärwellenbündel begünstigt wird, daß man diese Sekundärechos aufsammelt, wenigstens eines von ihnen isoliert und den Zeitverlauf seiner Amplitude mißt und registriert, um hiervon die Entwicklung des überwachten Phänomens abzuleiten.

2. Verfahren nach Anspruch 1, dadurch gekennzeichnet, daß man den Stab über einen wesentlichen Teil der Länge seiner Seitenfläche in das oder die Medien eintaucht.

3. Verfahren nach Anspruch 1, dadurch gekennzeichnet, daß man als Emissionsfläche eine Stirnfläche des Stabes benutzt, die senkrecht zu seiner Längserstreckung verläuft.

4. Verfahren nach Anspruch 3, dadurch gekennzeichnet, daß man die Sekundärwellen an der als Emissionsfläche benutzten Stirnfläche aufsammelt.

5. Verfahren nach Anspruch 1, dadurch gekennzeichnet, daß man einen Stab mit glatter Seitenfläche verwendet, vorzugsweise aus gezogenem Glas.

6. Verfahren nach Anspruch 1, dadurch gekennzeichnet, daß man einen langgestreckten Stab mit einer Dicke zwischen 8 und 30 mm benutzt und dementsprechend eine Ultraschallfrequenz zwischen 20 und 1 MHz auswählt.

7. Vorrichtung zur Überwachung und Messung des zeitlichen Entwicklungsverlaufs von physikalisch-chemischen, biologischen und bakteriologischen Phänomenen im Inneren eines Mediums oder zwischen zwei Medien mit einem an eine Sonde angeschlossenen Impulsgenerator (1), wobei die Sonde einen Kopf (2) mit einem Organ (8) zum Senden und Empfangen von Ultraschallwellen und einen langgestreckten, an das Organ (8) angekoppelten Stab (3) umfaßt, und mit einer Meßeinrichtung (5) für die vom Organ (8) ausgesandten und empfangenen Ultraschallwellen, dadurch gekennzeichnet, daß der Stab (3) mit dem oder den Medien in Berührung und an das Organ (8) mit einer senkrecht zu seiner Längserstreckung verlaufenden Stirnfläche (3A) angekoppelt ist, daß der Stab (3) eine glatte Seitenfläche hat, und daß die Meßeinrichtung (5) elektronische Mittel zur Selektierung eines der vom Organ (8) empfangenen Sekundärechos (F2 bis F6) sowie ein Registriermittel (6) für den zeitlichen Verlauf der Amplitude des selektierten Echos umfaßt.

8. Vorrichtung nach Anspruch 7, dadurch gekennzeichnet, daß der Stab (3) eine Seitenfläche besitzt, deren Länge wenigstens dreimal größer als seine Dicke ist.

9. Vorrichtung nach Anspruch 7, dadurch gekennzeichnet, daß der Stab (3) aus einem Material besteht, dessen Verhältnis der Ausbreitungsgeschwindigkeit longitudinaler Wellen zur Ausbreitungsgeschwindigkeit transversaler Wellen zwischen 1,57 und 1,70, vorzugsweise bei etwa 1,65 liegt.

10. Vorrichtung nach Anspruch 7, dadurch gekennzeichnet, daß der Stab (3) mit dem Kopf (2) abmontierbar oder abbrechbar verbunden ist.

## Claims

1. A process for monitoring and measuring the variation in respect of time of physico-chemical, biological or bacteriological phenomena within a medium or between two media, characterised by bringing into contact with said medium or said media at least a fraction of the side face of an elongate bar into which longitudinal ultrasonic waves are emitted, by way of an emission face in such a way as to promote in said bar the creation of beams of secondary waves which are reflected over the whole of said side face, collecting said secondary echos, isolating at least one thereof, and measuring and recording the variation in respect of time of the amplitude thereof in order to deduce therefrom the variation in the phenomenon being monitored.

2. A process according to claim 1 characterised in that the bar is immersed into the medium or media over a substantial fraction of the length of the side face thereof.

3. A process according to claim 1 characterised in that an end face of the bar which is perpendicular to its longitudinal dimension is used as the emission face.

4. A process according to claim 3 characterised in that the secondary waves are collected at the same emission end face.

5. A process according to claim 1 characterised by using a bar with a smooth side face, preferably of drawn glass.

6. A process according to claim 1 characterised by using an elongate bar of a thickness of between 8 mm and 30 mm and correspondingly choosing an ultrasound frequency of between 20 and 1 MhZ.

7. Apparatus for monitoring and measuring the variation in respect of time of physico-chemical, biological or bacteriological phenomena within a medium or between two media, comprising a pulse generator (1) connected to a probe comprising a head (2) with ultrasound emitter-receiver member (8) and an elongate bar (3) coupled to said member (8), and a device (5) for measuring the ultrasound waves emitted and received by the member (8), characterised in that the bar (3) is in contact with said medium or said media and is coupled to the member (8) by an end face (3A) perpendicular to its longitudinal dimension, said bar (3) has a smooth side face and the measuring device (5) comprises electronic means for selecting one of the secondary echos (F2 to F6) received by the member (8) and a means (6) for recording the variation of the amplitude in respect of time of the selected echo.

8. Apparatus according to claim 7 characterised in that the bar (3) has a side face whose length is greater than at least three times its thickness.

9. Apparatus according to claim 7 characterised in that the bar (3) is of a material having a ratio between the speed of propagation of longitudinal waves and the speed of propagation of transverse waves of between 1.57 and 1.70, preferably about 1.65.

10. Apparatus according to claim 7 characterised in that the bar (3) is assembled to the head (2) in such a way as to be detachable by dismantling or by breaking off.

Fig.1

Fig.3

## Fig. 2

## Fig. 4a

## Fig. 4b

## Fig. 4a'

## Fig. 4b'

## Fig. 5

## Fig. 6

# Fig.7

# Fig.8

Fig. 9

Fig. 10

## Fig.11

## Fig.12

## Fig:13

## Fig:14